# EUROPEAN PATENT APPLICATION

(11) **EP 1 863 231 A1**
(43) Date of publication of application: **05.12.2007**
(21) Application number: 06010964.2
(22) Date of filing: 29.05.2006
(51) Int. Cl.: H04L 12/56, H04L 12/24

(54) **Managing QoS in an unified way**

(71) Applicant: NOKIA SIEMENS NETWORKS GMBH & CO. KG, 81541 München (DE)
(72) Inventor: Frantz, Michael, 81737 München (DE); Ribeiro, Alexandre, 2615-063 Akverca (PT)
(74) Representative: Fischer, Michael

(57) **Abstract**

The proposed method, system and computer program product for managing QoS in an unified way in an Ethernet network, comprises:
- defining a set of unified NMS TCs to be stored within the NMS;
- for each NE having a given QoS configuration, mapping the set of unified NMS TCs, when possible, to NE TCs, which best fit the behavior of the unified NMS TCs so as to define, for each NE, a unified TC mapping table to be stored within the NMS;
- creating a service having a given unified NMS TC and having a first terminating NE (NE1) and a second terminating NE (NE6);
- selecting the NE TCs for the first and second terminating NEs (NE1, NE6) corresponding to the given unified NMS TC of the created service by checking the unified mapping tables of the two terminating NEs (NE1, NE6);
- calculating the route of the NEs (NE1, NE3, NE6) through which the packets of the created service are to be transmitted;
- selecting, for each NE along the calculated route, the NE TC which best fit the behavior of the given unified NMS TC of the created service by checking the unified TC mapping table of each NE along the calculated route;
- for each of the two directions of the calculated route, calculating if and which re-marking of priority bit values is required for each given NE (NE1, NE3, NE5) in the calculated route, by comparing priority bit values of the NE (NE1, NE3, NE5) which follows each the given NE (NE1, NE3, NE5) along the calculated service route.

## Description

The present invention relates to a method according to the preamble of claim 1, to a system according the preamble of claim 9 and to a computer program product according to the preamble of claim 10.

In recent years, the fast growing of packet based telecommunication networks and the large amount of services over such networks have led to a remarkable growth in traffic. A service hereby indicates an object in the network management system (NMS) which is used to model a customer service. A service is an object that establishes a relationship between a customer and the network resources used by the customer. Typical examples of services include VoIP calls, VoD services or any other type of multimedia services.

A service is typically defined via a template or via a profile and such service definition usually contains, as an attribute, a predefined level of Quality of Service (QoS). This QoS level usually indicates whether the service has a guaranteed bandwidth (GBW), i.e. the traffic always arrives at the destination at the agreed speed or if it is Best Effort (BE), i.e. depending upon the network's state, the traffic may or may not arrive, or it may suffer some delay. Each service may have one or several dedicated routes, one active route and a number of optional protecting routes. In a network, a path typically define a set of network elements (NE), links and ports where all the possible active and protecting routes go through. Each network element typically can work in one of two or more QoS modes. For example, some network elements can work in one of three different QoS modes, i.e. "Basic" QoS mode, "DiffServ" QoS mode and "Enhanced" QoS mode. These QoS modes can be either defined in industry specifications, e.g. "Basic" QoS is defined in standard IEEE 802.1D, or can be company proprietary, e.g. "Enhanced" QoS mode is Siemens proprietary.

In a network element (NE), for each configured QoS mode, a set of traffic classes (TCs) can be defined. The assigned NE TC defines the QoS level with which packets are handled in the network element. The NE TC which can be assigned to packets may depend on several other QoS configurations than the QoS mode configured in the network element. In fact, the NE-specific TC may depend also on other NE-specific QoS configurations such as the scheduler configuration, the number of queues and the color awareness configured in the NE.
Priority bits within packets, also called as .1p bits according to standard IEEE 802.IP, define, together with the QoS mode and the other NE-specific QoS configurations, the specific TC of the network element. The value of priority bits may range from 0 to 7 and the marked value define a different NE TC for each NE-specific configuration. In a network element, with a given configuration, packets are classified and forwarded according to the value of the priority bits.

In the NMS, priority mapping tables are available, for every network element, for defining, in dependence on each NE-specific configuration, the specific handling of the user .1p bits in each NE. The NE-specific priority mapping tables are required, because even if the same QoS mode or the same number of queues is configured in different NEs, the classification and forwarding rules may be different for the same value of user priority bits. This is especially true, when different NEs are supplied by different equipment vendors, TCs may having different names or same names and different behaviors.

Table 1 is an example of NE-specific priority mapping table, available in the NMS, for NEs provided by Siemens. Table 1 maps the value of the .1p bits to the TCs in dependence on the QoS mode for both "unicast" and "multicast" modes.

**Table 1**

| **Cast Mode** | **User Priority value (value of the .1p bits)** | **TC / QoS Mode** | | |
|---|---|---|---|---|
| | | **Basic** | **DiffServ** | **Enhanced** |
| Unicast | 7 | UC_TC7 | EF_UC | GBW_EF1_UC |
| | 6 | UC_TC6 | AF12_UC | GBW_EF2_UC |
| | 5 | UC_TC5 | AF11_UC | DS_EF_UC |
| | 4 | UC_TC4 | AF22_UC | GBW_AF11 UC |
| | 3 | UC_TC3 | AF21_UC | AF12_UC |
| | 2 | UC_TC2 | AF32_UC | DS_AF1_UC |
| | 1 | UC_TC1 | AF31_UC | DS_AF2_UC |
| | 0 | UC_TC0 | BE_UC | DS_BE_UC |
| Multicast | 7 | MC | EF_MC | GBW_EF_MC |
| | 6 | MC | - | - |
| | 5 | MC | - | DS_EF_MC |
| | 4 | MC | - | - |
| | 3 | MC | - | - |
| | 2 | MC | - | - |
| | 1 | MC | - | - |
| | 0 | MC | BE_MC | DS_BE_MC |

For a given network element, since only one QoS mode can be configured, it results that only a specific set of TCs is allowed, i.e. only one column of Table 1 is allowed.

The exemplary priority mapping table shown in Table 1 may vary if a different configuration of the scheduler, if a different number of queues and different color awareness is chosen for the specific NE.

In carrier grade Ethernet networks, as well as in SDH/SONET and ATM networks, a high service availability is required. High service availability can be guaranteed in Ethernet networks if certain requirements are fulfilled. A first requirement is that the NMS is able to manage the capacity of the network by knowing the route(s) through which service packets are transmitted. A second requirement is that the NMS is able to map the TC defined by an operator for a given service to the supported TCs in the terminating NEs of the given service. A third requirement is that the QoS level required for a given service is handled in a similar manner in all NEs along the service route.

However, due to the large variety of NE types available on the market, due to the different configurations supported by the different NE-types and due to the fact that carriers often use NEs from different vendors, it is very unlikely that homogenous networks exist.

Several scenarios may cause non-homogeneous Ethernet networks and may make it very difficult, for the user, to handle the user priority in a unified way. The result of such non-homogeneities is that, in order to ensure QoS for a service, it is necessary to take into account the behavior of each single NE in the network.

A first common scenario of the above mentioned several scenarios occurs when different network elements, in an Ethernet network, are configured with different QoS modes. A drawback of this scenario is that the operator has to be aware of the QoS mode configured in each network element along the service route and has to configure, for the same service type, different TCs and remarking, if required for the next hop, in different NEs in accordance with the specific QoS modes. This requires that the operator, when configuring a service, is aware and takes into account, in a quasi-manual way, a huge amount of details regarding the specific single NE configurations. Examples of these huge amount of network details include the route defined by spanning tree, the QoS modes configured for each NE traversed by the route, the scheduler configuration, the number of queues, the color awareness, the TC of the service, which NE TCs for each configuration match best the TC configured for the service at the terminating network elements, what are the alternative routes, and so on. The typical task of the operator is to configure the subscriber service with its service TC and not to be aware of these network details.

A second scenario of the above mentioned several scenarios occurs when different types of network elements, in an Ethernet network, behave differently for the same value of priority bits and for the same QoS mode, i.e. when different NE types have different forwarding and classification rules. A drawback of this scenario is that, if the operator does not take into account network details, QoS cannot be guaranteed for the service, according to its SLA, due to the fact that the packets of a given service are handled differently in different network elements along the route. This again requires that the operator, when configuring a service, is aware and takes into account, in a quasi-manual way, a huge amount of details regarding the NE-specific QoS configurations.

A third scenario of the above mentioned several scenarios occurs, when in an Ethernet network, the two previous scenarios co-exist together, i.e. when different QoS modes are configured in the network and when different forwarding and classification rules are supported by the different network element for a given TC, even when the same QoS mode is configured. In such a situation, in order to ensure QoS, the operator has to consider the different QoS modes, as well as the different classification and forwarding behavior of the NEs in the network.

Prior art solutions to the above mentioned drawbacks include manual investigation of the possible effects of the different forwarding mechanisms in the network elements, manual bookkeeping of the classification and forwarding rules for each network element and the manual configuration of the required configurations in every port participating in the realization of a service. This manual proceeding however requires too much effort to be considered as a viable solution.

Thus, as above explained, the major drawback of prior art methods is that, in Ethernet networks, in order to ensure a predefined level of QoS for a created service, manual investigation of a huge amount of network details is required. As a results, the prior art methods are not a solution but a real problem for the network operator.

It is therefore aim of the present invention to overcome the above-mentioned drawbacks, in particular by providing a method, a system and a computer program product for managing QoS in a unified way in an Ethernet network which minimizes the required manual intervention while ensuring a predefined QoS level for customer services.

The aforementioned aim is achieved by a method, a system and a computer program product for managing QoS in an unified way in an Ethernet network, the Ethernet network comprising a plurality of NEs, being configured with a given QoS configuration and a NMS for configuring services utilizing the NEs; the invention comprising:
a) defining a set of unified NMS TCs to be stored within the NMS;
b) for each NE having a given QoS configuration, mapping the set of unified NMS TCs, when possible, to NE specific TCs, which best fit the behavior of the unified NMS TCs so as to define, for each NE, a unified TC mapping table to be stored within the NMS;
c) creating a service having a given unified NMS TC and having a first terminating NE and a second terminating NE;
d) selecting the NE TCs for the first and second terminating NEs corresponding to the given unified NMS TC of the created service by checking the unified mapping tables of the two terminating NEs;
e) calculating the route of the NEs through which the packets of the created service are to be transmitted;
f) selecting, for each NE along the calculated route, the NE TC which best fit the behavior of the given unified NMS TC of the created service by checking the unified TC mapping table of each NE along the calculated route;
g) for each of the two directions of the calculated route, calculating if and which re-marking of priority bit values is required for each given NE in the calculated route, by comparing priority bit values of the NE (which follows each the given NE(NE1, NE3, NE5) along the calculated service route.

In the invention, the given QoS configuration may preferably comprise one or more of the following NE specific configurations:
- QoS mode;
- scheduler configuration;
- number of queues;
- color awareness.

The invention may advantageously comprise:
h) by the NMS, configuring the selected NE TCs of point c) in the corresponding first and second terminating NEs.

The invention may advantageously comprise:
i) by the NMS, checking if the required calculated re-marking of point g) is already configured in each NE along the calculated route;
j) by the NMS, configuring the required calculated remarking of each of the involved NE having a different remarking configuration than the required one.

The invention may preferably comprise:
k) by the NMS, checking if the required calculated re-marking of step g) is possible in each NE along the calculated route;
1) for the NEs in which remarking is not possible, modifying their internal priority mapping tables in accordance.

The invention may conveniently comprise:
m) if the priority bit values of the NE which follows each the given NE along the calculated service route are the different, then remarking of the priority bit values is required; otherwise
n) if the priority bit values of the NE (NE1, NE3, NE5) which follows each the given NE (NE1, NE3, NE5) along the calculated service route are the same, then remarking of the priority bit values is not required.

The invention may preferably comprise:
when points d) and f) cannot be performed, informing, by the NMS, about the occurred incompatibility.

In the invention, some or all of the described features/steps may be automatically performed by the NMS.

With the proposed invention, the operator is enabled to use different QoS modes for the network elements in the network, e.g. in case some NE-types do not support certain QoS modes, without restricting the usage of the functionality concerning the QoS guarantees for SLAs.
With the proposed invention, the operator is enabled to build up his network out of different NE types with different classification and forwarding mechanisms in one network, without restricting the usage of the functionality concerning the QoS guarantees for SLAs.
With the proposed invention, upon creation of a new service, the operator has only to configure the service for the subscriber, without taking care about the network specific details.

The invention will now be described in preferred but not exclusive embodiments with reference to the accompanying drawing, wherein:

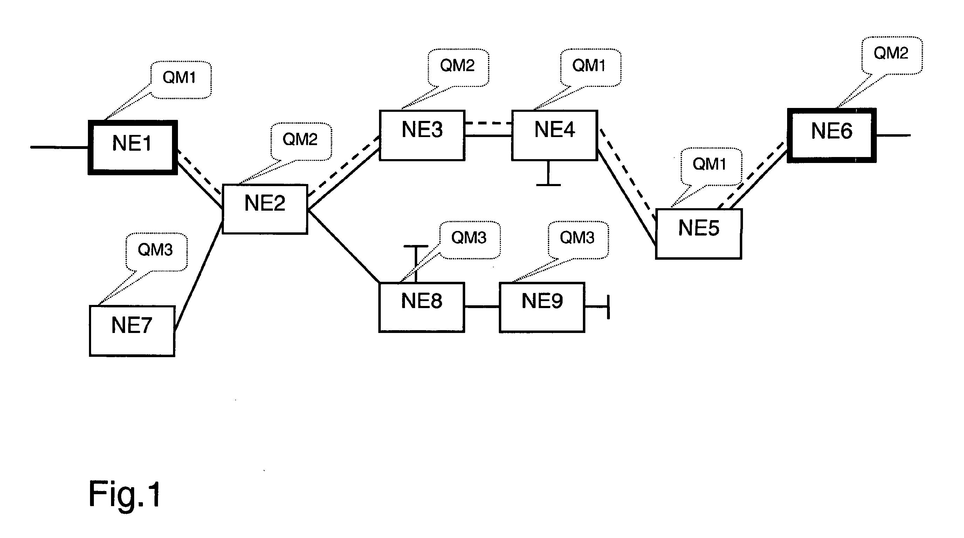

- Figure 1: is a block diagram illustrating an example of network topology.

Figure 1 depicts an example of an Ethernet network topology with nine network elements NE1, NE2 to NE9.

The NMS in the Ethernet network is responsible for managing QoS of customer services. A customer service is created having as service end-ports the two terminating network elements NE1, NE6. A service route is calculated via STP. In the network topology example of Figure 1, the service route is represented by the dashed line connecting between a first terminating network element NE1 and a second terminating network element NE6. Six network elements NE1, NE2, NE3, NE4, NE5, NE6 are traversed by the service route.
The continuous lines among the network elements NE1, NE2, .., NE9 represent physical/logical Ethernet links.

The service route illustrated by the dashed line in Figure 1 represents, for simplicity, two service routes, one for each direction. In a further embodiment according to the present invention, the service route of one direction may traverse different NEs than the ones traversed by the other service route of the other direction.

Each network element is configured to work in one of the three different QoS modes, "Basic" QoS mode QM3, "DiffServ" QoS mode QM2 and "Enhanced" QoS mode QM1. In a further example according to the present invention, a number of QoS modes different than three and QoS modes having different names and meanings may be allowed in some or all network elements.

The callouts of Figure 1 represent the QoS modes QM1, QM2, QM3 configured in each network element NE1, NE2, .., NE9.

The two terminating NEs NE1, NE6 are respectively configured to work in Enhanced QM1 and DiffServ QM2 QoS modes.

The remaining four elements NE2, NE3, NE4, NE5 along the service route included between the terminating NEs NE1, NE6 are respectively configured to work in DiffServ QM2, DiffServ QM2, Enhanced QM1 and Enhanced QM1 QoS modes.

According to the present invention, in the NMS, a set of unified NMS TCs is defined. The set of unified NMS TCs contains TCs that can be used for all services independently from the QoS mode QM1, QM2, QM3 configured in each specific NE NE1, NE2, .., NE5 and independently from the classification and forwarding rules configured in each specific NE NE1, NE2, .., NE6. For each NE NE1, NE2, .., NE6 of the network, a unified TC mapping table is created, mapping each unified NMS TC, when possible, to the corresponding NE-specific TC, for a given QoS mode, taken from the NE-specific priority mapping table, which fits at best the QoS level definition of the unified NMS TCs.
The unified mapping table is created by knowing which of the NE TCs with given QoS modes QM1, QM2, QM3 are mostly compatible with the unified NMS TCs by considering also the classification and scheduler configuration as well as the configured number of queues and color awareness.

An example of a set of unified TCs defined in the NMS, for unicast mode, is [GBW_EF1_UC; GBW_EF2_UC; DEF_UC; GBW_AF1_UC; DS_AF1_UC; DS_BE_UC]]. For multicast mode, a set of unified NMS TCs may be [GBW_EF_MC; DS_EF_MC; DS_BE_MC].

Table 2 shows a general example for the mapping of the unified NMS-TCs to the NE-TCs in dependence on the configurable QoS modes QM1, QM2, QM3, for a network element NE1, NE2, .., NE6 having as priority mapping table the example Table 1.

**Table 2:**

| **Unified TC in the NMS** | **NE TC / QoS Mode** | | | | | |
|---|---|---|---|---|---|---|
| | **Basic** | | **DiffServ** | | **Enhanced** | |
| | TC | 1.p value | TC | 1.p value | TC | 1.p value |
| GBW_EF1_ UC | UC_TC7 | 7 | EF_UC | 7 | GBW_EF1_ UC | 7 |
| GBW_EF2_ UC | UC_TC6 | 6 | AF11_UC | 6 | GBW_EF2_ UC | 6 |
| DS_EF_UC | UC_TC5 | 5 | AF12_UC | 5 | DS_EF_UC | 5 |
| GBW_AF1_ UC | UC_TC4 | 4 | AF21_UC | 5 | GBW_AF11 _UC | 3 |
| DS_AF1_U C | UC_TC2 | 2 | AF31_UC | 4 | DS_AF1_U C | 4 |
| DS_BE_UC | UC_TCO | 0 | BE_UC | 0 | DS_BE_UC | 0 |
| GBW_EF_M C | MC | 7 | EF_MC | 7 | GBW_EF_M C | 7 |
| DS_EF_MC | MC | 7 | | | DS_EF_MC | 5 |
| DS_BE_MC | MC | 0 | BE_MC | 0 | DS_BE_MC | 0 |

The 1.p values of Table 2 are exemplary ones and may be changed to other values in further embodiments of the present invention. In addition Table 2 may be expanded/reduced to include more/less unified NMS TCs.

Even for NEs NE1, ..,NE6 configured with the same QoS mode QM1, QM2, QM3, the classification and forwarding rules may result in a different mapping of the unified NMS TC.

By creating, for each specific NE NE1, NE2, .., NE6, its unified mapping table based on the specific QoS configurations in the NEs, it is possible to select the NE-specific TC which fits at best a given unified NMS TC.
For example, for the first terminating NE NE1 of Figure 1, in which Enhanced QoS mode QM1 is configured, its unified mapping table is exemplified by Table 2a which is a subset of general Table 2.

**Table 2a:**

| **Unified TC in the NMS** | **TC** | **1.p value** |
|---|---|---|
| GBW_EF1_UC | GBW_EF1_UC | 7 |
| GBW_EF2_UC | GBW_EF2_UC | 6 |
| DS_EF_UC | DS_EF_UC | 5 |
| GBW_AF1_UC | GBW_AF11_UC | 3 |
| DS_AF1_UC | DS_AF1_UC | 4 |
| DS_BE_UC | DS_BE_UC | 0 |
| GBW_EF_MC | GBW_EF_MC | 7 |
| DS_EF_MC | DS_EF_MC | 5 |
| DS_BE_MC | DS_BE_MC | 0 |

Each unified mapping table, e.g. Table 2a, is built up when the NMS learns a specific given NE NE1, ..,NE6, i.e. before a service is actively configured via the NMS, and is valid for all services whose route is traversing the specific given NE NE1,..,NE6.

If anything is changed in the network, the NE table is adopted accordingly.

As it can be noticed from the example general Table 2, not all the unified NMS TCs have a corresponding NE TC for every QoS modes, e.g. NMS TC DS_EF_MC does not have any corresponding NE TC when QoS mode is set to DiffServ in the NE.

In the NMS, default values may be configured for the mapping of the unified NMS TC to the NE-specific QoS mode per TC, i.e. the NE's specific classification and forwarding behavior.

In a further embodiment according to the present invention, the unified NMS TCs may be modified, deleted as well as new unified NMS TCs may be created. The default unified mapping tables may be modified as well as enhanced or reduced.

Preferably, the modification may be restricted to specific users, for example, by requiring that such specific users have special rights, e.g. system administrators.

According to the present invention, when a new service is created by the operator, a unified TC is selected in the NMS for the created service. For example, the unified NMS traffic class DS_EF_UC is selected by the operator as the TC for the service created on the example network of Figure 1.

The below paragraphs describe the steps that are automatically performed by the NMS, in order to ensure that the QoS level of the created service is managed in a unified way by configuring the selected unified NMS TC in the network.

The NMS identifies the NE TCs to be configured in the end-NEs NE1, NE6 of the created service in dependence of the QoS NE-specific configurations of such two end-NEs NE1, NE6 by checking their corresponding unified mapping tables.

For example, assuming that the first terminating NE NE1 of the created service has the unified mapping table shown in Table 2a, the selected NE-specific TC for the first terminating NEs NE1, which fits at best the chose unified NMS TC DS_EF_UC, is DS_EF_UC (1.p value 5, see third row of Table 2a). Instead, as regards the second terminating NE NE6 of the created service, it is assumed that its specific classification and forwarding behavior is different than the one exemplified in Table 2a and exemplary excerpts of its unified mapping table are shown in Table 2b.

**Table 2b**

| **Unified TC in the NMS** | **TC** | **1.p value** |
|---|---|---|
| ... | ... | ... |
| DS_EF_UC | AF11_UC | 6 |
| ... | ... | ... |

Thus, for the second terminating NE NE6 of the created service, its selected NE-specific TC, which fits at best the chose unified NMS TC DEF_UC, is AF11_UC (1.p value 6, see second row of Table 2b).

For the created service, the route through which the service packets are to be transmitted over is calculated.

The calculated route may be the active route or one of the optional protecting routes.

According to the present invention, for each of the two directions of the calculated route, the NMS calculates the required re-marking for the next NE NE1,..NE6, based on the NE-specific mapping tables of the pair of adjacent NE NE1,..,NE6.

In Ethernet networks, remarking defines the modification, performed by a NE and resulting at the NE egress port, of the priority bit value of packets having a given priority bit value.

In order to calculate the required remarking for the NEs along the service route, the NMS selects for each specific NE NE2, .., NE5, included between the terminating points NE1, NE6 in the service route, the NE-specific TC which fits at best a given unified NMS TC at a given NE-specific configuration, e.g. at a given pre-configured QoS mode QM1, QM2, QM3 in the NE. As above explained, other NE-specific configuration may include classification, configuration of the scheduler, number of queues and color awareness.

To do this, the NMS queries, for each NE NE2, ..., NE5 E, its NE-specific unified mapping table at its configured QoS mode QM1, QM2, QM3.

The NMS learns the configuration of a NE NE1,.., NE6 when the NE NE1,.., NE6 is uploaded to the NMS, i.e. before any service is created via the NMS.

For the network example shown in Figure 1, Table 3 shows, for each NE NE1, ..., NE6, the assumed selected NE-specific TC which fits at best the chosen NMS TC DS_EF_UC taken from each corresponding NE specific unified mapping table. T

**Table 3:**

| **unified NMS TC DS_EF_UC** | | | |
|---|---|---|---|
| | **TC** | **QoS mode** | **.1p value** |
| **NE1** | DEF UC | Enhanced | 5 |
| **NE2** | AF12 UC | DiffServ | 5 |
| **NE3** | AF11 UC | DiffServ | 6 |
| **NE4** | DEF UC | Enhanced | 5 |
| **NE5** | DEF UC | Enhanced | 5 |
| **NE6** | AF11 UC | DiffServ | 6 |

In order to verify if and how the chosen unified NMS TC is supported by the network, the NMS checks if and which corresponding NE-specific TC are to be selected, for the QoS modes QM1, QM2, QM3 configured in the NEs NE1, ..., NE6 along the service route.

In fact, in some cases, the chosen unified NMS TC for the service may not have a corresponding NE-specific TC in a given NE NE1, ..., NE6. For example, when for a created service the unified NMS-TC "DS_EF_MC" is chosen, there is no corresponding NE-specific TC for a NE NE1 having as unified mapping table column DiffServ QoS mode QM2 taken from exemplary general table shown in Table 2. When such an incompatibility case occurs, the NMS may inform the operator that the chosen unified NMS TC cannot be supported in the NE. In further embodiments of the present invention, the NMS may inform the operator which is the NE that cannot support the chosen unified NMS-TC for the service. In a further embodiment of the present invention, the NMS may give the option to the operator to configure manually the mapping of the unified NMS TC to the NE TC to be used.

The required remarking is calculated, for one direction, by checking along the service route, if the next hop, i.e. the next NE NE2, NE3, requires a change of the value of the .1p priority bits to fit the unified NMS TC selected for the service.

Table 4a shows the calculated required remarking for the direction NE1 to NE6.

**Table 4a:**

| **Port** | **Re-mark Yes/No** | **Old →New 1.p value** |
|---|---|---|
| **NE1 to NE2** | No | - |
| **NE2 to NE3** | Yes | 5 → 6 |
| **NE3 to NE4** | Yes | 6 → 5 |
| **NE4 to NE5** | No | - |
| **NE5 to NE6** | Yes | 5 → 6 |

As shown in Table 4a, in the direction NE1 to NE6, at the egress port of the second NE NE2, packets with 1.p value 5 have to be remarked to 6, at the egress port of the third NE NE3, packets with 1.p value 6 have to be remarked to 5 and at the egress port of the fifth NE NE5, packets with 1.p value 5 have to be remarked to 6. Instead, at the egress ports of the first and the forth NEs NE1, NE4 no remarking is required for the packets having 1.p value 5.

with the remarking proposed in Table 4a, it is ensured that, in the direction NE1 to NE6, packets of the created service having the unified NMS TC "DS_ EF_UC" are mapped, for each NE NE1,.., NE6 to the best fitting corresponding NE-specific TC,.

Table 4b shows the calculated required remarking for the direction NE6 to NE1.

**Table 4b:**

| **Port** | **Re-mark Yes/No** | **Old →New 1.p value** |
|---|---|---|
| **NE6 to NE5** | Yes | 6 → 5 |
| **NE5 to NE4** | No | - |
| **NE4 to NE3** | Yes | 5 → 6 |
| **NE3 to NE2** | Yes | 6 → 5 |
| **NE2 to NE1** | No | - |

As shown in Table 4b, in the direction NE6 to NE1, at the egress port of the first NE NE6, packets with 1.p value 6 have to be remarked to 5, at the egress port of the third NE NE4, packets with 1.p value 5 have to be remarked to 6 and at the egress port of the forth NE NE3, packets with 1.p value 6 have to be remarked to 5. Instead, at the egress ports of the second and the fifth NEs NE5, NE2 no remarking is required for the packets having 1.p value 5.

For each of the two directions of the calculated route, the NMS calculates if and which re-marking of priority bit values is required for each given NE NE1, NE3, NE5 in the calculated route, by comparing priority bit values of the NE NE1, NE3, NE5 which follows each said given along the calculated service route. If the hop, i.e. next NE NE4, NE5, has a different mapped 1.p value, remarking is required otherwise no remarking is required.

Through the remarking calculation, the NMS is able to verify if the chosen unified NMS TC for the service can be supported in the network.

Advantageously, with the present invention, it is checked if packets with a dedicated user priority can be classified and forwarded in the required mode independently on the NE-specific configuration.

If the chosen unified NMS_TC can be supported in the network, the NMS, during classification, configures the NE-specific TCs selected for the terminating NEs NE1, NE6.

As regards the required remarking, the NMS, before making any configuration, may check, for each created service, if the required re-marking was already configured, by a previous service, in the network or not, and, accordingly, decides if a different remarking configuration is needed or not.
Thus, there exist the following possibilities why remarking is not required: 1)the NE NE5 which defines the next hop has the same configured QoS behavior (i.e. QoS mode, scheduler configuration, number of queues, color awareness ...) as the preceding NE NE4, 2) the remarking for the specific 1.p value in the NE NE4.

If there are NEs NE3, NE5 in the network in which re-marking is not possible, a virtual remarking may performed by modifying the internal NE table that maps TCs to .1p bits, e.g. Table 1. In such a way, the packets are not modified at the egress port of a given NE NE1,.., NE6, but nonetheless the next NE NE1,.., NE6 treats packets in the same way as the previous NE, if the NE mapping tables are logically coherent, i.e. the NE NE1,.., NE6 which defines the next hop has the same configured as the preceding one.

The skilled in the art easily understands that in order to create a service more calculations and configurations are typically required, while the proposed invention focuses on the required steps for supporting, by the NMS, upon a service creation, a unified NMS TC.

The unified NMS TCs may be used for the unique service template and profiles definitions in the NMS.

In a further embodiment of the present invention, the operator may use the NE-specific unified mapping table also for retrieving information on the network. For example, the operator can learn which are the unified NMS TCs which cannot be supported in given network routes due to inconsistent classification and forwarding rules. In addition, the operator, may make an overview to learn in which NEs NE1, .., NE6 remarking is required.

### List of used acronyms:

- AF: Assured Forwarding
- BE: Best Effort
- DS: DiffServ
- EF: Expedited Forwarding
- GBW: Guaranteed Bandwidth
- IP: Internet Protocol
- LER: Layer Edge Router
- MC: Multicast
- NE: Network Element
- NMS: Network Management System
- QoS: Quality of Service
- SLA: Service Level Agreement
- STP: Spanning Tree Protocol
- TC: Traffic Class
- UC: Unicast
- VoIP: Voice over IP
- VoD: Video on Demand

## Claims

1. A method for managing Quality of Service, herein after referred to as QoS, in an unified way in an Ethernet network, said Ethernet network comprising a plurality of network elements (NE1, NE3, NE6), herein after referred to as NEs, being configured with a given QoS configuration and a network management system, herein-after referred to as NMS, for configuring services utilizing the NEs (NE1, NE3, NE6); said method being **characterized in that** it comprises the steps of:
a) defining a set of unified NMS traffic classes to be stored within the NMS, herein-after referred to as unified NMS TCs;
b) for each NE having a given QoS configuration, mapping the set of unified NMS TCs, when possible, to NE specific traffic classes, herein-after referred to as NE TCs, which best fit the behavior of the unified NMS TCs so as to define, for each NE, a unified TC mapping table to be stored within the NMS;
c) creating a service having a given unified NMS TC and having a first terminating NE (NE1) and a second terminating NE (NE6);
d) selecting the NE TCs for the first and second terminating NEs (NE1, NE6) corresponding to the given unified NMS TC of the created service by checking the unified mapping tables of the two terminating NEs (NE1, NE6);
e) calculating the route of the NEs (NE1, NE3, NE6) through which the packets of the created service are to be transmitted;
f) selecting, for each NE along the calculated route, the NE TC which best fit the behavior of the given unified NMS TC of the created service by checking the unified TC mapping table of each NE along the calculated route; and
g) for each of the two directions of the calculated route, calculating if and which re-marking of priority bit values is required for each given NE (NE1, NE3, NE5) in the calculated route, by comparing priority bit values of the NE (NE1, NE3, NE5) which follows each said given NE (NE1, NE3, NE5) along the calculated service route.

2. The method according to claim 1, wherein said given QoS configuration comprises one or more of the following NE specific configurations:
- QoS mode (QM1, QM2, QM3);
- scheduler configuration;
- number of queues;
- color awareness.

3. The method according to any of the preceding claims, further comprising the step of:
h) by the NMS, configuring the selected NE TCs of step c) in the corresponding first and second terminating NEs (NE1, NE2).

4. The method according to any of the preceding claims, further comprising the step of:
i) by the NMS, checking if the required calculated re-marking of step g) is already configured in each NE (NE2, NE3, NE5) along the calculated route;
j) by the NMS, configuring the required calculated remarking of each of the involved NE (NE2, NE3, NE5) having a different remarking configuration than the required one.

5. The method according to any of the preceding claims, further comprising the step of:
k) by the NMS, checking if the required calculated re-marking of step g) is possible in each NE (NE2, NE3, NE5) along the calculated route;
l) for the NEs (NE2, NE3, NE5) in which remarking is not possible, modifying their internal priority mapping tables in accordance.

6. The method according to any of the preceding claims, wherein said step g) further comprises the step of:
m) if the priority bit values of the NE (NE1, NE3, NE5) which follows each said given NE (NE1, NE3, NE5) along the calculated service route are the different, then remarking of the priority bit values is required; otherwise
n) if the priority bit values of the NE (NE1, NE3, NE5) which follows each said given NE (NE1, NE3, NE5) along the calculated service route are the same, then remarking of the priority bit values is not required.

7. The method according to any of the preceding claims, further comprising the step of:
o) when said step d) and said step f) cannot be performed, informing, by the NMS, about the occurred incompatibility.

8. The method according to any of the preceding claims, wherein said steps a) to g) are automatically performed by the NMS.

9. A system having means for performing the steps of the method according to any of the claims 1 to 8.

10. A computer program product for performing the steps of the method according to any of the claims 1 to 8.
